# EUROPEAN PATENT SPECIFICATION

(11) **EP 1 219 570 B1**
(45) Date of publication and mention of the grant of the patent: **30.11.2005**
(21) Application number: 01205189.2
(22) Date of filing: 31.12.2001
(51) Int. Cl.: C02F 3/00

(54) **A method and a device for the purification of waste water**
Verfahren und Vorrichtung zur Behandlung von Abwasser
Procédé et dispositif pour le traitement des eaux usées

(30) Priority: 29.12.2000 NL 1017009
(43) Date of publication of application: 03.07.2002
(73) Proprietor: Gemeente Amsterdam, Gemeentelijke Dienst Afvalverwerking, 1045 BA Amsterdam (NL)
(72) Inventor: M.A.J. van Berlo, 1058 EN Amsterdam (NL); De Vries, Cornelis, 1035 HJ Amsterdam (NL)
(74) Representative: Van Breda, Jacobus

(56) References cited:
- EP-A- 0 040 986
- DE-A- 4 420 111
- DATABASE WPI Section Ch, Week 199517 Derwent Publications Ltd., London, GB; Class D15, AN 1995-129744 XP002177629 & SU 1 834 864 A (GVOZDEV NIKOLAJ V; DROZDOV EGOR V; PARINOV OLEG M), 15 August 1993 (1993-08-15)
- PATENT ABSTRACTS OF JAPAN vol. 002, no. 123 (M-036), 14 October 1978 (1978-10-14) & JP 53 092545 A (ISHIKAWAJIMA HARIMA HEAVY IND CO LTD), 14 August 1978 (1978-08-14)

## Description

The present invention relates to a method and an apparatus for the treatment of waste water, comprising the supply of polluted water to an inlet of a water purification plant, the treatment of the water in the water purification plant, resulting in treated effluent, and the discharge of the effluent.

Such methods are generally known in practice. The water may come, for example, from urban sewage systems, or from another source, and is treated biologically in the water purification plant. Generally speaking, the processes taking place in the plant are biological processes. In addition, sedimentation processes and optional filtration steps are also provided. A general draw back of such methods is that they are temperature-dependent. The temperature depends on the time of year. This means that because of the low temperatures prevailing in the winter, more time is required than in the summer. Due to the fact that the water purification plant has to be dimensioned on the basis of the lowest reaction rate, the winter temperature has to be taken as point of departure.

Derwent Abstract AN-1995-129744 (SU-A-1,834,864) describes a method for breaking down so-called secondary sludge, by mixing incineration gases with said sludge. This mixing takes place in an aeration tank of a sewage water purification plant. A disadvantage of the method is that odorous components are emitted from the aeration tank into the atmosphere.

Document DE-4420111 describes a method for the biological treatment of wastewater in which the temperature of the water is increased directly by the introduction of heat energy such as combustion grasses. Smaller treatment bassins are required to achieve the required treatment result.

The object of the invention is to improve the method such that it can be carried out more quickly. The object of the invention is in particular to increase the reaction rate at all times. The object of the invention is especially to increase the reaction rate by raising the temperature of the water to be treated. The object of the invention is also to provide an apparatus with which the above-described objectives can be realized.

In order to realize the above-mentioned objectives, the invention provides a method as mentioned in the preamble, which is characterized in that the temperature of the effluent is raised by means of heat transfer, by contacting at least a portion of the effluent with combustion gasses from a combustion process, and the heated effluent is fed to the inlet of the water purification plant.

The term "contacted" refers to both direct and indirect contact. According to a preferred embodiment, the effluent is brought into direct contact with the combustion gasses in a counterflow gas washer. If direct contact is not desired, the heat transfer can take place, for example, with the aid of a plate heat exchanger or a tubular heat exchanger.

According to another preferred embodiment the heated effluent is first mixed with polluted water subsequent to which the mixture obtained is fed to the inlet of the water purification plant. In this way the mixture to be treated that is fed to the water purification plant has the raised temperature right from the beginning.

According to yet another preference the effluent is contacted with the combustion gasses from a waste incineration plant. It is particular preferable that the effluent is contacted with the combustion gasses in a final step prior to discharging the combustion gasses via a flue. The advantage of this is that the rest heat still present in the combustion gasses and which otherwise would be discharged via the flue, is now utilized for elevating the temperature of the effluent.

An unexpected advantage is that due to the effluent directly contacted with the combustion gasses, pollutants present in the combustion gasses of the waste incineration plant are absorbed. These substances are then degraded in the water purification plant and converted into substantially harmless compounds. Possible non-degradable pollutants that are absorbed by the effluent are adsorbed by the sludge in the water purification plant. After dewatering, this sludge may be fed to, for example, the waste incineration plant. In this way said pollutants are converted into harmless residue.

According to a preferred embodiment, sewage water is fed to a water purification plant. In the winter, sewage water has a temperature of approximately 11°C and in the summer a temperature of approximately 22°C. The water purification plant will work better at a higher temperature due to the fact that the biological processes are accelerated. This applies in particular to nitrification. This means that at a stable effluent quality, a smaller reaction volume will suffice in the summer or that at a same system volume a higher rate is created. An elevation in the sewage water temperature from 11°C to approximately 25°C will mean that the original system volume may be reduced up to 25%. A rise in temperature from 11°C to approximately 18°C will allow the system volume to be halved. Preferably therefore, the temperature of the water to be fed to the water purification plant is as high as possible, while still allowing the necessary processes to carry on.

According to the invention a portion of the effluent is fed to the combustion gasses of an incineration plant. This portion of the effluent may, for example, be fed to the combustion gasses of a waste incineration plant. To this end the effluent may be contacted with the combustion gasses in a gas washer. In the washer the effluent will absorb a part of the heat of the combustion gasses (assuming that the temperature of the combustion gasses is higher than the temperature of the effluent), by means of condensation it will absorb a part of the gaseous water in the combustion gasses, and will also absorb a part of the pollutants in the combustion gasses. The heated effluent may subsequently be returned to the inlet of the water purification plant.

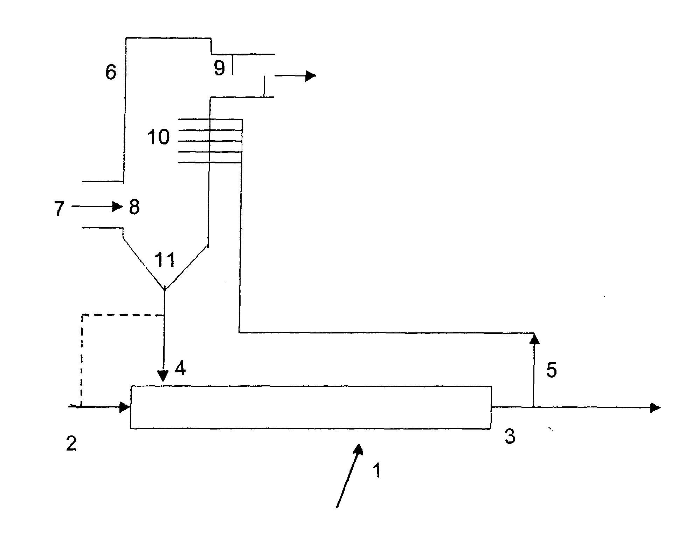

The figure shows a schematic illustration of a water purification plant in combination with a waste incineration plant. Of the waste incineration plant only the latter part of the combustion gasses' path is schematically illustrated.

The invention will now be further elucidated with reference to an example of the method according to the invention.

In the present example the temperature of the combustion gasses entering the gas washer is 61°C. The relative humidity of the combustion gasses is 100%. Having passed through the gas washer, the temperature of the combustion gasses will be, for example, 30°C, while the relative humidity remains at 100%. Thus part of the water in the combustion gasses will have been condensed in the effluent.

The water purification plant 1 has an inlet 2 and an outlet 3. As shown in the figure, the water purification plant also has a second inlet 4. The inlet 2 feeds the purification plant with, for example, sewage water, while the second inlet 4 feeds heated effluent to the water purification plant. The second inlet 4 may optionally be positioned as indicated by the dotted line, which means that in fact only one inlet 2 remains. In the water purification plant the processes that are common practice are carried out for the purification of the water. At 5, part of the effluent is branched off and fed to a gas washer 6, in which the effluent is sprayed in a manner generally known in the art. At the bottom of the gas washer at a position 8, combustion gasses 7 are fed to the gas washer 6 and in the top of the gas washer at a position 9, they are discharged. At a position 10 in the top of the gas washer, the effluent is fed into the gas washer and is discharged at a position 11 in the bottom of the gas washer. The effluent must always enter at a position such that it comes into contact with the combustion gasses.

Due to the fact that the gas washer is operated in counterflow, contacting between effluent and combustion gasses is satisfactory. When being fed to the gas washer 6, the combustion gasses 7 usually have a temperature of 61°C. In a steady state condition, the effluent fed to the gas washer will have a temperature of approximately 18.2°C. In an exemplary case as commonly occurs in practice, approximately 600 tons per hour (dry base) combustion gas will be fed to the gas washer. An amount of approximately 5000 m³ of effluent per hour will be fed to the gas washer. The effluent will then be heated to 30°C, abstracting 85 m³ of water per hour from the flue gasses. On exiting from the gas washer, the combustion gasses will have a temperature of approximately 30°C. At an influent flow rate to the water purification plant consisting, for example, of sewage water having a temperature of 11°C, of 7800 m³ per hour, the mixture being fed to the water purification plant will have the total resulting temperature of 18.2°C.

This means that the water purification plant can be operated in the winter at a temperature of 18.2°C (instead of 11°C), whereas the temperature in the summer may be 29.2°C (instead of 22°C). At an influent flow rate of 7800 m³ per hour as mentioned above, this means that the system volume may decrease by 50% from 125,000 m³ to 62,500 m³ because of the elevated system temperature and the consequential acceleration of the biological processes.

The pollutants that are removed by the gas washer from the combustion gas are absorbed by the effluent. Due to the fact that this effluent is again led through the water purification plant, the components absorbed from the combustion gasses, such as organic components (CₓH_{y} and PCDD/F), as well as metals and the corresponding metal sulphides, fluoride in the form of calcium fluoride and dust present in the gasses will to a large extent settle in the water purification plant and be adsorbed by the sludge. This sludge is separated in the usual manner from the water phase. After dewatering, the sludge may be fed to the waste incineration plant. Said organic components will then be incinerated. As the flue gasses in a waste incineration plant are already being thoroughly cleaned, in addition to which simultaneous residual separation takes place, virtually all the residue fed via the sludge to the waste incineration plant will be removed. Subsequently, in the manner described above, any remaining material in the gas washer is absorbed from the flue gasses by means of the effluent.

In addition, the ammonia that was present in the flue gasses and that was absorbed by the effluent in the gas washer, will in the water purification plant be converted into N₂. The remaining components such as fluoride and sulphate compounds will be discharged with the effluent.

An example of the extent to which pollutants are abstracted from the combustion gasses is as follows.

| Component | Before gas washer (µg/Nm³) | After gas washer (µg/Nm³) |
|---|---|---|
| HF | 4 | < 1 |
| HCL | 190 | < 20 |
| SO₂ | 2800 | < 300 |
| NH₃ | 83 | < 10 |
| CₓH_{y} | 380 | < 250 |
| PCDD/F | 46·10⁻⁶ | < 10·10⁻⁶ |
| | | |
| Dust | 550 | < 100 |
| | | |
| Cd | 0.32 | < 0.05 |
| Hg | 1.79 | < 0.5 |
| Zn | 23.4 | < 5 |
| Remaining heavy metals | 23.5 | <5 |

According to a further preferred embodiment it is possible via the gas washer to also remove NOₓ or CO respectively, from flue gasses by means of oxidation into nitrate or CO₂, respectively. In the water purification plant the nitrate may subsequently undergo biological conversion into nitrogen.

In that case, the combustion gasses, which are subsequently discharged from the gas washer contain approximately 10% by volume of CO₂. These combustion gasses are very useful for the production of biomass. For example, it may be fed to green houses for the production of plants. In that case, discharge of the combustion gasses via a flue can be omitted altogether.

The invention is not limited to the embodiment described in the above example. For example, it is possible to feed combustion gasses having a temperature that differs from the one mentioned above to the gas washer or to abstract them therefrom. Also, the temperature of the effluent may differ from that given above. Other adaptations will be obvious to a person skilled in the art.

## Claims

1. Method for the biological treatment of waste water comprising the supply of polluted water to an inlet (2; 4) of a water purification plant (1), the treatment of the water in the water purification plant (1) resulting in treated effluent, and the discharge of the effluent, **characterized in that** the temperature of the effluent is raised by means of heat transfer, by contacting at least a portion of the effluent with combustion gasses (7) from a combustion process, and the heated effluent is fed to the inlet (2; 4) of the water purification plant (1).

2. Method according to claim 1, **characterized in that** the heated effluent is first mixed with polluted water subsequent to which the mixture obtained is fed to the inlet (2) of the water purification plant (1).

3. Method according to claim 2, **characterized in that** the effluent is contacted with the combustion gasses (7) in a counterflow gas washer (6).

4. Method according to claims 1-3, **characterized in that** the polluted water is sewage water.

5. Method according to claims 1-4, **characterized in that** the combustion gasses (7) are derived from a waste incineration plant.

6. Method according to claims 1-5, **characterized in that** in a final step, the effluent is contacted with the combustion gasses (7) prior to discharging the combustion gasses via a flue (9).

7. Method according to claims 1-5, **characterized in that** in a final step, the effluent is contacted with the combustion gasses (7) before discharging the combustion gasses (7) to a biomass production unit.

8. Method according to claims 1-7, **characterized in that** in the gas washer (6) water-vapour from the combustion gasses (7) is condensed in the effluent.

9. Method according to claims 1-8, **characterized in that** in the gas washer (6) water-soluble compounds are dissolved in the effluent.

10. Method according to claims 1-9, **characterized in that** sludge from the water purification plant (1) is supplied to the combustion process.

11. A water purification plant (1), comprising an inlet (2) for water to be purified and an outlet (3) for treated effluent, as well as a treatment section for the biological purification of waste water, **characterized in that** the water purification plant (1) also comprises a second outlet (5) for supplying a portion of the effluent to a contacting plant (6) in order to bring the portion of the effluent into contact with combustion gasses (7) of a combustion process in order to heat the portion of the effluent, as well as a second inlet (4), which is located at a position upstream from the second outlet, for the supply of the heated effluent to the water purification plant (1).

12. Water purification plant (1) according to claim 11, **characterized in that** the second inlet (4) is located at the beginning of the water purification plant (1), and the second outlet (5) at the end of the water purification plant (1).

## Patentansprüche

1. Verfahren für die biologische Aufbereitung von Schmutzwasser umfassend die Zufuhr von verschmutztem Wasser zu einem Zulauf (2, 4) einer Wasserkläranlage (1), die Aufbereitung des Wassers in der Wasserkläranlage (1), die aufbereitetes Abwasser ergibt und dem Abfließen des Abwassers,
**dadurch gekennzeichnet, dass**
die Temperature des Abwassers mittels Wärmeübergan erhöht ist, durch Kontakt wenigstens eines Anteils des Abwassers mit Verbrennungsgasen (7) von einem Verbrennungsprozess, und
das erwärmte Abwasser in den Zulauf (2, 4) der Wasserkläranlage (1) gespeist wird.

2. Verfahren gemäß Anspruch 1,
**dadurch gekennzeichnet, dass**
das erwärmte Abwasser zuerst mit verschmutztem Wasser vermischt wird und das erhaltene Gemisch nachfolgend in den Zulauf (2) der Wasserkläranlage (1) gespeist wird.

3. Verfahren gemäß Anspruch 2,
**dadurch gekennzeichnet, dass**
das Abwasser in einem Gegenstrom-Gaswascher (6) mit den Verbrennungsgasen (7) in Kontakt kommt.

4. Verfahren gemäß einem der Ansprüche 1 bis 3,
**dadurch gekennzeichnet, dass**
das verschmutzte Wasser Klärwasser ist.

5. Verfahren gemäß einem der Ansprüche 1 bis 4,
**dadurch gekennzeichnet, dass**
die Verbrennungsgase (7) von einer Abfallverbrennungsanlage stammen.

6. Verfahren gemäß einem der Ansprüche 1 bis 5,
**dadurch gekennzeichnet, dass**
in einem abschließenden Schritt das Abwasser mit den Verbrennungsgasen (7) in Kontakt kommt vor Ausstoß der Verbrennungsgase (7) durch einen Abzug (9).

7. Verfahren gemäß einem der Ansprüche 1 bis 5,
**dadurch gekennzeichnet, dass**
in einem abschließenden Schritt das Abwasser mit den Verbrennungsgasen (7) in Kontakt kommt vor dem Ausstoß der Verbrennungsgase (7) zu einer Biomassen-Produktionseinheit.

8. Verfahren gemäß einem der Ansprüche 1 bis 7,
**dadurch gekennzeichnet, dass**
im Gaswascher (6) Wasserdampf von den Verbrennungsgasen (7) im Abwasser kondensiert wird.

9. Verfahren gemäß einem der Ansprüche 1 bis 8,
**dadurch gekennzeichnet, dass**
im Gaswascher (6) wassermischbare Verbindungen im Abwasser gelöst werden.

10. Verfahren gemäß einem der Ansprüche 1 bis 9,
**dadurch gekennzeichnet, dass**
Schlamm von der Wasserkläranlage (1) dem Verbrennungsprozess zugeführt wird.

11. Wasserkläranlage (1) umfassend einen Zulauf (2) für das zu reinigende Wasser und einen Ablauf (3) für das aufbereitete Abwasser und auch einen Aufbereitungsabschnitt für die biologische Reinigung des Schmutzwassers,
**dadurch gekennzeichnet, dass**
die Wasserkläranlage (1) ebenso einen zweiten Ablauf (5), für die Zufuhr eines Anteils des Abwassers zu einer Kontaktanlage (6), um den Anteil des Abwassers in Kontakt mit Verbrennungsgasen (7) von einem Verbrennungsprozess zu bringen, zwecks den Anteil des Abwassers zu erwärmen, und auch einen zweiten Zulauf (4), der in einer Position stromaufwärts von dem zweiten Ablauf angeordnet ist, für die Zuführung des erwärmten Abwassers zur Wasserkläranlage (1), umfasst.

12. Wasserkläranlage (1) gemäß Anspruch 11,
**dadurch gekennzeichnet, dass**
der zweite Zulauf (4) am Anfang von der Wasserkläranlage (1) und der zweite Ablauf (5) am Ende von der Wasserkläranlage (1) angeordnet ist.

## Revendications

1. Procédé de traitement biologique des eaux usées comprenant l'acheminement des eaux polluées vers un port d'entrée (2 ; 4) d'une station de production d'eau potable (1), le traitement des eaux dans la station de production d'eau potable (1) donnant lieu à un effluent traité, et au déversement de l'effluent, **caractérisé en ce que** la température de l'effluent est augmentée par le biais d'un transfert thermique, en mettant en contact au moins une partie de l'effluent avec des gaz de combustion (7) issus d'un processus de combustion, et l'effluent chauffé est acheminé jusqu'au port d'entrée (2 ; 4) de la station de production d'eau potable (1).

2. Procédé selon la revendication 1, **caractérisé en ce que** l'effluent chauffé est d'abord mélangé avec les eaux polluées, après quoi le mélange obtenu est acheminé jusqu'au port d'entrée (2) de la station de production d'eau potable (1).

3. Procédé selon la revendication 2, **caractérisé en ce que** l'effluent est mis en contact avec les gaz de combustion (7) dans un laveur à contre courant (6).

4. Procédé selon les revendications 1 à 3, **caractérisé en ce que** les eaux polluées sont des eaux d'égout.

5. Procédé selon les revendications 1 à 4, **caractérisé en ce que** les gaz de combustion (7) sont dérivés d'une centrale d'incinération de déchets.

6. Procédé selon les revendications 1 à 5, **caractérisé en ce que** lors d'une étape finale, l'effluent est mis en contact avec les gaz de combustion (7) avant le déversement des gaz de combustion par l'intermédiaire d'un gros tube (9).

7. Procédé selon les revendications 1 à 5, **caractérisé en ce que** lors d'une étape finale, l'effluent est mis en contact avec les gaz de combustion (7) avant le déversement des gaz de combustion (7) vers une unité de production de biomasse.

8. Procédé selon les revendications 1 à 7, **caractérisé en ce que** dans le laveur (6) la vapeur d'eau provenant des gaz de combustion (7) est condensée dans l'effluent.

9. Procédé selon les revendications 1 à 8, **caractérisé en ce que** dans le laveur (6) les composés hydrosolubles sont dissous dans l'effluent.

10. Procédé selon les revendications 1 à 9, **caractérisé en ce que** la boue issue de la station de production d'eau potable (1) est acheminée vers le processus de combustion.

11. Station de production d'eau potable (1), comprenant un port d'entrée (2) pour l'eau à purifier et un port de sortie (3) pour l'effluent traité, de même qu'une section de traitement pour la purification biologique des eaux usées, **caractérisée en ce que** la station de production d'eau potable (1) comporte également un second port de sortie (5) pour acheminer une partie de l'effluent vers une centrale de contact (6) afin d'amener la partie de l'effluent en contact avec les gaz de combustion (7) d'un processus de combustion afin de chauffer la partie de l'effluent, de même qu'un second port d'entrée (4), qui est situé à un emplacement en amont du second port de sortie, pour acheminer l'effluent chauffé vers la station de production d'eau potable (1).

12. Station de production d'eau potable (1) selon la revendication 11, **caractérisée en ce que** le second port d'entrée (4) est situé au début de la station de production d'eau potable (1), et le second port de sortie (5) à la fin de la station de production d'eau potable (1).
